Europäisches Patentamt

European Patent Office

Office européen des brevets

(19)

(11) Veröffentlichungsnummer: **0 001 763**
**A1**

(12) **EUROPÄISCHE PATENTANMELDUNG**

(21) Anmeldenummer: **78101109.3**

(22) Anmeldetag: **10.10.78**

(51) Int. Cl.²: **F 24 J 3/02**

(30) Priorität: **04.11.77 DE 2749347**

(43) Veröffentlichungstag der Anmeldung:
**16.05.79 Patentblatt 79/10**

(84) Benannte Vertragsstaaten:
**BE CH FR GB LU NL SE**

(71) Anmelder: **Messerschmitt-Bölkow-Blohm Gesellschaft mit beschränkter Haftung**
**Postfach 801109**
**D-8000 München 80(DE)**

(72) Erfinder: **Malburg, Werner**
**Eichendorffstrasse 39**
**D-8012 Ottobrunn(DE)**

(54) **Flachkollektor zum Einfangen des Sonnenlichts.**

(57) Ein Flachkollektor zum Auffangen des Sonnenlichts hat einen mit einem Wärmeträgermedium aufgefüllten Innenraum. Er stellt eine mit Ein- und Auslässen (17,18) versehene Paneele (10) aus lichtdurchlässigem Material dar, wobei der Innenraum als Strömungskanal (11) ausgebildet ist. Das Wärmeträgermedium (12) ist eine Flüssigkeit mit suspensierten Stäuben (13), so daß das Sonnenlicht in der Flüssigkeit absorbiert wird. Um ein Absetzen der Stäube zu verhindern, ist der Strömungskanal (11) mit Turbulatoren (16) ausgerüstet.

1/1

Fig.1

EP 0 001 763 A1

Croydon Printing Company Ltd.

MESSERSCHMITT-BÖLKOW-BLOHM  Ottobrunn, 18.10.1977
    GESELLSCHAFT  8209
MIT BESCHRÄNKTER HAFTUNG  BT01 Fro/gö
    MÜNCHEN

Flachkollektor zum Einfangen des Sonnenlichts

Die Erfindung betrifft einen Flachkollektor zum Einfangen des
Sonnenlichts mit einem von einem Wärmeträgermedium aufgefüllten Innenraum.

Flachkollektoren der genannten Art sind in einer Vielzahl von
Varianten seit langem bekannt. Als Grundtyp eines konventionellen Solarkollektors darf der in Tagesbericht "Heizen mit Sonne",
Deutsche Gesellschaft für Sonnenenergie e.V. 23./24.2.1976,
Göttingen auf Seite 83 dargestellte Kollektor bezeichnet werden.
Dieser besteht im wesentlichen aus einem mit einer Glasscheibe
abgedeckten Kasten. Unterhalb der Glasscheibe ist eine Metallfläche mit hochabsorbierender Oberfläche angeordnet. Diese Metallfläche wirkt als optische Trennschicht, in der die Umsetzung in Wärme erfolgt. Diese Wärme wird über ein Temperaturgefälle in Abhängigkeit von der Leitfähigkeit der Metallwand an
das in Röhren befindliche flüssige oder auch gasförmige Wärmetransportmedium weitergeleitet. Die die Wärme überführende
Fläche ist im wesentlichen identisch mit der Einstrahlfläche.

Eine metallene schwarze Fläche der in den Kollektoren verwendeter Art kommt auf eine die maximale Absorption kennzeichnende
Strahlungszahl von $C \approx 4,6 \left[ kcal/m^2 \cdot h \cdot {}^{o}\overline{4} \right]$ wobei aber noch der
Wärmewiderstand beim Durchgang durch die Wand anfällt. Die maximal mögliche, theoretische Absorption für den schwarzen Körper
ist mit

$$C = \xi \cdot C'_s \quad \xi = 1 \text{ für den schwarzen Körper}$$
$$C_{s'} = 4,96 \quad kcal/m^2 h^{o4}$$

definiert. Eine Flüssigkeit wie Wasser hat aber bereits eine

Strahlungszahl von 4,75 $[kcal/m^2 h^o4]$, mithin bereits 97% der des schwarzen Körpers. Aus der DT-OS 25 08 339 ist ein Sonnenkollektor bekannt geworden, der zwar einen als Glaskörper ausgebildeten Absorptionskörper aufweist, der aber ebenfalls nicht ohne Absorptionsmittel der vorgeschilderten Art auskommt und daher auch mit den geschilderten Nachteilen behaftet ist.

Aufgabe der Erfindung ist es, einen Kollektor zu schaffen, der eine möglichst verlustarme Übertragung der Sonnenenergie auf das Wärmetransportmedium gestattet.

Diese Aufgabe ist dadurch gelöst, daß der Kollektor eine ebene, allseits geschlossene, mit Ein- und Auslässen versehene, einen Strömungskanal bildende Paneele aus lichtdurchlässigem Material ist, daß als Wärmeträgermedium eine Flüssigkeit mit suspensierten schwarzen Stäuben dient und daß der Strömungskanal mit Turbulatoren ausgerüstet ist.

Weitere günstige Ausgestaltungen der Erfindung ergeben sich aus den Unteransprüchen.

Die Vorteile der Erfindung sind insbesondere darin zu sehen, daß sich neben der Korosions- und Witterungsfestigkeit der Paneele eine erhebliche Verbesserung der Absorptionsleistung einstellt. Der in sich geschlossene Kanal bringt bei Verwendung von Glas infolge dessen geringer Wärmeleitfähigkeit eine günstige Wärmedämmung in den der Strahlung abgewandte Richtungen.

Eine Glas- oder Kunststoffpaneele läßt sich billig in großtechnischer Serie herstellen, der Baustoff ist leicht und damit ohne zusätzlichen Trägeraufwand auf Dächern usw. installierbar. Die künstlich turbulent gehaltene Dispersion ergibt

vorzugsweise

eine wesentlich erhöhte konvektive Oberfläche für den Wärmeaustausch zwischen Flüssigkeit und den zusätzlich strahlungsabsorbierenden Stäuben. Der Wärmewiderstand wie er bei Verwendung konventioneller Kollektoren an deren Absorberoberfläche
anfällt ist bei der Paneele nicht vorhanden.

Zum besseren Verständnis ist die Erfindung anhand eines in
den Figuren dargestellten Ausführungsbeispieles näher erläutert. Es zeigen:

Fig. 1    das Grundprinzip eines Kollektors nach der Erfindung;

Fig. 2    ein Ausführungsbeispiel im Querschnitt;

Fig. 3    einen Kollektor mit Isolationskanal im Querschnitt.

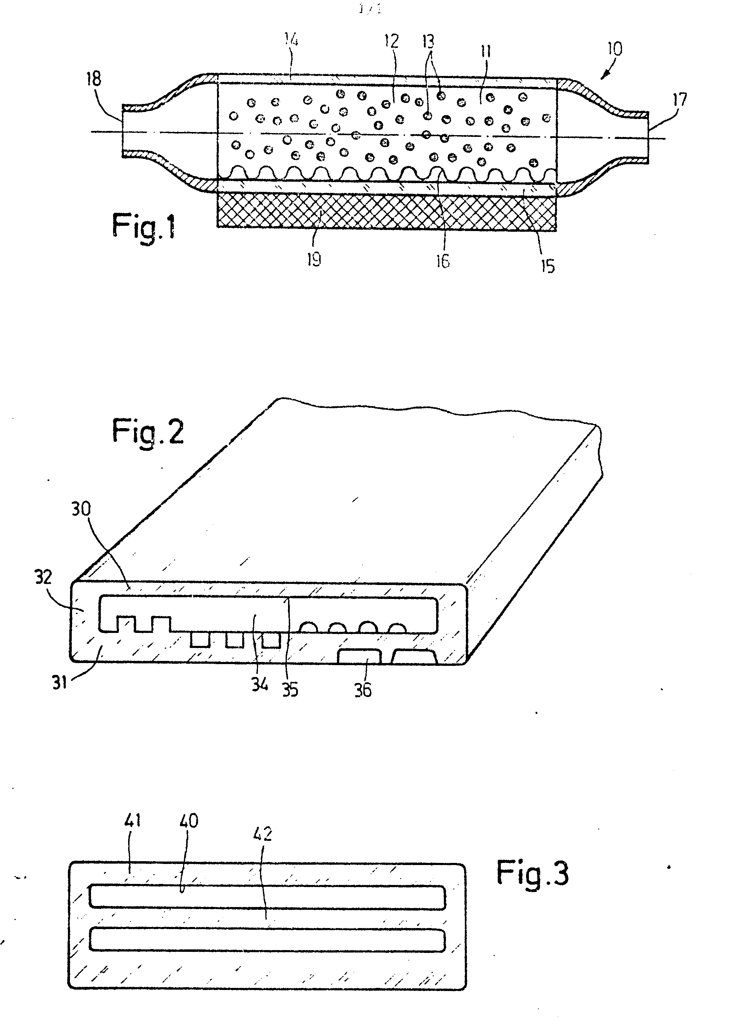

Gemäß Fig. 1 besteht der Kollektor im Prinzip aus einem klar
durchsichtigen Glasgefäß 1o, in dessen Strömungskanal 11 sich
das flüssige Wärmetransportmedium 12 befindet. In der Flüssigkeit befindet sich fein dispergiert bzw. suspendiert ein
schwarzer Staub 13. Das kann z.B. körnige Kohle, Öl-Ruß,
Graphit oder Metall- bzw. Metalloxidstaub sein, oder ganz allgemein Stoffe mit großer Emmissionszahl und günstiger spezif.
Wärme bzw. Wärmeleitzahl. Hierdurch entsteht eine wesentlich
vergrößerte, Strahlung aufnehmende Oberfläche.

Das einfallende Licht 2o passiert unter Teilreflexion 21 und
Absorption 22 die äußere Wand 14 und dringt unmittelbar in
das Wärmetransportmedium 12 ein. Die Staubpartikel 13 heizen
sich ebenfalls auf und geben ihre Wärme durch Konvektion an
die Flüssigkeit ab. Die Stärke der Wand 14 ist so bemessen,
daß die Absorption in der Wand möglichst gering gehalten wird, ohne daß die Tragfähigkeit unter einen notwendigen Wert absinkt.

Am Boden 15 ist ein Turbulator 16 angebracht. Das können eingelegte, bzw. eingewalzte bzw. gezogene Turbulenzrillen oder -Noppen sein, s.a. Fig.2. Der Turbulator kann mit einer spiegelnden Schicht überzogen sein, so daß neben der Steigerung des flüssigkeitsinternen Wärmeaustausches eine Rückstrahlung der noch die Flüssigkeit durchdringenden Reststrahlung erreicht wird. Ein- und Auslaß 17, 18 schließlich dienen der Zufuhr gekühlten Wärmeträgermediums bzw. dem Abtransport der erhitzten Flüssigkeit.

Je nach Bedarf kann der Kollektor auf einer Dämmung 19 ausgelegt sein.

Fig. 2 zeigt ein konkretes Ausführungsbeispiel. Die Außenwand 30 ist stärker in Relation zum Boden 31. Ebenso sind die Seiten 32 zur besseren Isolation verstärkt. Zusätzlich ist der Boden 36 verript, was einerseits zu Gewichts- und Materialeinsparung führt, andererseits die Tragfähigkeit und die Isolationswirkung verbessert. Die Noppen 34 sind nur als Beispiele gedacht und können jede beliebige, geeignete Form aufweisen. Wie bereits ausgeführt, ist eine spiegelnde Schicht aufgebracht, welche sinnvoll durch eine reflektierende Schicht 35 ergänzt wird. Vorzugsweise ist der Turbulator am Boden der Paneele angebracht, es können aber auch Turbulenzen erzeugende Ausformungen über weitere Partien des Strömungskanals verteilt werden.

Fig. 3 zeigt einen Kollektor, der neben den bereits beschriebenen und in der Figur nicht näher dargestellten Merkmalen einen Isolationskanal 40 aufweist. Damit wird Konvektion von der Wand 42 über die Wand 41 verhindert und gleichzeitig ein Aus-

- 5 -

treten der von der Wand 42 und dem Wärmeträgermedium im Strömungskanal 43 ausgehende Infrarotstrahlung unterbunden. Die Wand 41 kann auf der Innenseite mit Infrarot reflektierender Beschichtung ausgerüstet werden.

Der Isolationskanal 40 ist luftdicht gegen seine Umgebung ausgestaltet. Je nach Anforderung an den Kollektor kann der Kanal ganz oder teilweise evakuiert werden.

MESSERSCHMITT-BÖLKOW-BLOHM
GESELLSCHAFT
MIT BESCHRÄNKTER HAFTUNG
MÜNCHEN

Ottobrunn, 03.01.1977
8209
BT01 Fro/gö

Flachkollektor zum Einfangen des Sonnenlichts

P a t e n t a n s p r ü c h e

1. Flachkollektor zum Einfangen des Sonnenlichts mit einem
von einem Wärmeträgermedium aufgefüllten Innenraum, dadurch g e k e n n z e i c h n e t , daß der Kollektor
eine vorzugsweise ebene, allseits geschlossene, mit Ein-
und Auslässen (17,18) versehene, einen Strömungskanal
(11) bildende Paneele (10) aus einem lichtdurchlässigen
Material ist, daß als Wärmeträgermedium (12) eine Flüssigkeit mit suspensierten Stäuben (13) dient und daß der
Strömungskanal (11) mit Turbulatoren (16) ausgerüstet
ist.

0001763

2. Flachkollektor nach Anspruch 1, dadurch g e k e n n -
z e i c h n e t , daß oberhalb des Strömungskanals (11)
ein allseits geschlossener Isolationskanal (40) angeordnet
ist.

3. Flachkollektor nach Anspruch 2, dadurch g e k e n n -
z e i c h n e t , daß der Isolationskanal (40) auf einen
geeigneten Wert evakuiert ist.

4. Flachkollektor nach Anspruch 1 oder 2 und 3, dadurch
g e k e n n z e i c h n e t , daß die äußere Wand (14)
so dimensioniert ist, daß geringste Strahlungsabsorption
in der Wand bei ausreichender Tragfähigkeit gegeben ist.

5. Flachkollektor nach einem der vorhergehenden Ansprüche, dadurch g e k e n n z e i c h n e t , daß die Seitenwände
(32) und der Boden (31) zur Erhöhung der Isolationswirkung
verstärkt sind.

6. Flachkollektor nach einem der vorhergehenden Ansprüche, dadurch g e k e n n z e i c h n e t , daß der Turbulator
am Boden (15) des Strömungskanals (11) angeordnet ist.

7. Flachkollektor nach einem der vorhergehenden Ansprüche, dadurch g e k e n n z e i c h n e t , daß der Turbulator
(16) reflektierend ausgebildet ist.

8. Flachkollektor nach einem der vorhergehenden Ansprüche, dadurch g e k e n n z e i c h n e t , daß die äußere Wand
(14) auf ihrer Innenseite eine Reflexionsschicht aufweist.

9. Flachkollektor nach einem der vorhergehenden Ansprüche, dadurch g e k e n n z e i c h n e t , daß die Boden-Außenseite (36) profiliert ist.

Fig.1

Fig.2

Fig.3

BAD ORIGINAL

**EUROPÄISCHER RECHERCHENBERICHT**

Europäisches Patentamt

Nummer der Anmeldung

EP 78 101 109.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| - | DE - A - 2 510 321 (SCHENKEL)<br>* Seite 1, Absatz 1; Fig. 3 bis 5,<br>Positionen 1 und 2; Fig. 4,<br>Position 3 * | 1,2,3 |
| | -- | |
| - | DE - A - 2 461 973 (M. POSNANSKY u.a.)<br>* Seite 4, Absatz 2; Fig. 5,<br>Position 19 und Seite 6,<br>Absatz 3 * | 1,4 |
| | -- | |
| - | DE - A - 2 532 623 (E. KLÖCKNER)<br>* Seite 3, Absatz 2; Anspruch 3;<br>Seite 2, Absatz 2 * | 1,6,7 |
| | -- | |
| - | DE - A - 2 601 170 (HOECHST)<br>* Seite 7, Absatz 1; Seite 9,<br>Absatz 1 * | 1,8 |
| | -- | |
| P | DE - A - 2 623 862 (H. RÜCKSTÄDTER)<br>* Seite 2, Absätze 1 bis 3 * | 1 |
| | -- | |
| D | DE - A - 2 508 339 (A. KELLER)<br>* Fig. 1 * | 1 |
| | ---- | |

**KLASSIFIKATION DER ANMELDUNG (Int.Cl.²)**

F 24 J 3/02

**RECHERCHIERTE SACHGEBIETE (Int Cl.²)**

F 24 J 3/02

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 24-01-1979 | PIEPER |

EPA form 1503.1 06.78